# EUROPEAN PATENT APPLICATION

(11) **EP 4 804 045 A1**
(43) Date of publication of application: **09.09.2026**
(21) Application number: 25209566.6
(22) Date of filing: 17.10.2025
(51) Int. Cl.: G06F 16/2453, G06F 16/903

(54) **DATABASE DATA PROCESSING METHOD, ELECTRONIC DEVICE AND STORAGE MEDIUM**

(30) Priority: 05.03.2025 CN 202510258785
(71) Applicant: Beijing Volcano Engine Technology Co., Ltd., Beijing 100190 (CN); Bytedance Technology Ltd., KY1 - 1205 Grand Cayman Cayman Islands (KY)
(72) Inventor: KANG, Rong, Beijing, 100028 (CN); LIANG, Zhimin, Beijing, 100028 (CN); WANG, Shuai, Beijing, 100028 (CN); XU, Xianghong, Beijing, 100028 (CN); XU, Linhui, Beijing, 100028 (CN); ZHANG, Tieying, Los Angeles, 90066 (US); CHEN, Jianjun, Los Angeles, 90066 (US); SHI, Rui, Beijing, 100028 (CN)
(74) Representative: Isarpatent

(57) **Abstract**

A database data processing method and a related device are provided by the present disclosure. The method includes: creating (S201), in response to a database receiving a query request for target data, a plurality of candidate query plans corresponding to the query request, where each of the candidate query plans includes an execution strategy for querying index information of the target data; invoking (S202), for each piece of index information in each of the candidate query plans, a virtual index plugin configured in the database to send a cost estimation request to a cost estimation service, where the cost estimation request is used to request the cost estimation service to estimate, for the index information, statistical information required for evaluating an index cost; determining (S203), according to the statistical information required for evaluating the index cost and estimated by the cost estimation service through simulating a real index according to database basic statistical information in response to the cost estimation request for each piece of index information, a query cost of each of the candidate query plans; and determining (S204), from the plurality of candidate query plans, a target query plan of which query cost meets a preset condition, and controlling execution of the target query plan.

## Description

### TECHNICAL FIELD

Embodiments of the present disclosure relate to a database data processing method, an electronic device and a storage medium.

### BACKGROUND

In a database service scenario, various possible index information is often simulated through hypothetical analysis, and the impact of the index information on query performance is predicted, so as to find out an optimal index scheme. This process requires frequent creation and deletion of candidate index information and evaluation of the effect of the candidate index information.

In an actual database service scenario, a data table often has a large scale, and a single index creation operation may take several minutes or even dozens of minutes, such a long time cost is unbearable for an online business that requires a quick response. Therefore, the efficiency of the database data processing method is poor.

### SUMMARY

At least one embodiment of the present disclosure provides a database data processing method, including:

creating, in response to a database receiving a query request for target data, a plurality of candidate query plans corresponding to the query request, where each of the candidate query plans includes an execution strategy for querying index information of the target data;

invoking, for each piece of index information in each of the candidate query plans, a virtual index plugin configured in the database to send a cost estimation request to a cost estimation service, where the cost estimation request is used to request the cost estimation service to estimate, for the index information, statistical information required for evaluating an index cost;

determining, according to the statistical information required for evaluating the index cost and estimated by the cost estimation service through simulating a real index according to database basic statistical information in response to the cost estimation request for each piece of index information, a query cost of each of the candidate query plans; and

determining, from the plurality of candidate query plans, a target query plan of which query cost meets a preset condition, and controlling execution of the target query plan.

At least one embodiment of the present disclosure provides a database data processing apparatus, including:
a creating unit, configured to create, in response to a database receiving a query request for target data, a plurality of candidate query plans corresponding to the query request, where each of the candidate query plans includes an execution strategy for querying index information of the target data;
an invoking unit, configured to invoke, for each piece of index information in each of the candidate query plans, a virtual index plugin configured in the database to send a cost estimation request to a cost estimation service, where the cost estimation request is used to request the cost estimation service to estimate, for the index information, statistical information required for evaluating an index cost;
a determining unit, configured to determine, according to the statistical information required for evaluating the index cost and estimated by the cost estimation service through simulating a real index according to database basic statistical information in response to the cost estimation request for each piece of index information, a query cost of each of the candidate query plans; and
a controlling unit, configured to determine, from the plurality of candidate query plans, a target query plan of which query cost meets a preset condition, and control execution of the target query plan.

At least one embodiment of the present disclosure provides an electronic device, including: at least one processor and at least one memory;
where the at least one memory stores computer-executable instructions; and
the at least one processor executes the computer-executable instructions stored in the at least one memory to cause the at least one processor to execute the database data processing method according to at least one embodiment of the present disclosure .

At least one embodiment of the present disclosure provides a non-transitory computer-readable storage medium, where the non-transitory computer-readable storage medium stores computer-executable instructions, and when at least one processor executes the computer-executable instructions, the database data processing method according to at least one embodiment of the present disclosure is implemented.

At least one embodiment of the present disclosure provides a computer program product, including a computer program, where when the computer program is executed by a processor, the database data processing method according to at least one embodiment of the present disclosure is implemented.

### BRIEF DESCRIPTION OF DRAWINGS

In order to more clearly illustrate the technical schemes in at least one embodiment of the present disclosure, a brief introduction will be given below for the drawings required to be used in the description of at least one embodiment. It is obvious that the drawings in the following description are some embodiments of the present disclosure, and for those of ordinary skills in the art, other drawings may further be acquired according to these drawings without paying any creative efforts.
Fig. 1 is a schematic diagram of an application scenario of a database data processing method provided in at least one embodiment of the present disclosure.
Fig. 2 is a flowchart of a database data processing method provided in at least one embodiment of the present disclosure.
Fig. 3 is a schematic diagram of a database data processing method provided in at least one embodiment of the present disclosure.
Fig. 4 is a flowchart of a method for determining numbers of distinct values of multiple columns provided in at least one embodiment of the present disclosure.
Fig. 5 is a flowchart of a method for determining a number of rows of a multiple-column query result set provided in at least one embodiment of the present disclosure.
Fig. 6 is a schematic structural diagram of a database data processing apparatus provided in the at least one embodiment of the present disclosure.
Fig. 7 is a schematic structural diagram of an electronic device provided in at least one embodiment of the present disclosure.

### DETAILED DESCRIPTION

In order to make the purposes, technical schemes and advantages of at least one embodiment of the present disclosure clearer, the technical schemes in at least one embodiment of the present disclosure will be described clearly and completely below in combination with the drawings in at least one embodiment of the present disclosure. Obviously, the described embodiments are part of the embodiments of the present disclosure, not all of them. Based on the embodiments in the present disclosure, all other embodiments obtained by those of ordinary skills in the art without paying any creative efforts belong to the protection scope of the present disclosure.

It should be noted that the user information (including but not limited to user device information, user personal information, etc.) and data (including but not limited to data for analysis, stored data, displayed data, etc.) involved in one or more embodiments of this specification are information and data authorized by users or fully authorized by all parties, and the collection, use and processing of relevant data need to comply with relevant laws, regulations and standards, and corresponding operation entrances are provided for users to choose authorization or rejection.

Firstly, some nouns in the embodiments of the present disclosure are explained:
Database: a database is an electronic system for storing and managing data. You may imagine it as a huge digital library that stores various kinds of information. This information is organized in an orderly manner to facilitate users to quickly search, update or manage.
Table: in a database, a table is like a large spreadsheet for storing a specific type of data. Each table consists of multiple rows and columns, similar to a worksheet in Excel, where each row represents a data record, and each column contains a specific attribute or field of the record.
Column: a column represents an attribute of data in a database table, for example, a database table of a person may include columns such as "name", "age" and "address". Each column has a fixed data type, which determines the nature and operation mode of the data, such as a number, text or date.
Index: an index is a special structure in a database and may be regarded as a table of contents of a book. It helps the database quickly locate the data in a table. Without an index, the database needs to scan the entire table to find the data, which is as time-consuming as flipping through the entire book to find a chapter. With an index, the search speed is greatly increased.
MySQL query process: when a user executes a SQL query (such as querying data in a table) in a MySQL database, the query is first sent to an "optimizer". The optimizer is responsible for parsing the query and finding out the best execution plan. Then, this plan will be sent to an underlying storage engine (such as InnoDB), which is responsible for specific data search and processing.
MySQL query optimizer: the MySQL query optimizer is an intelligent component in a database, which analyzes a user's query requests and determines the most effective way to execute these requests. The optimizer will evaluate multiple possible query paths, such as whether to use an index and how to connect tables, and then select an execution scheme with the lowest cost.
MySQL storage engine: the MySQL storage engine is an underlying software component that processes data storage, retrieval and management. Different storage engines provide different data processing capabilities, performance optimization and transaction characteristics. Common storage engines include InnoDB and MyISAM, where InnoDB supports transaction processing and row-level locking, which is suitable for high-concurrency write scenarios. MyISAM is known for its fast reading speed and is suitable for simple query scenarios that do not require complex transactions.
NDV (Number of Distinct Values): NDV represents a total number of different values of a certain column in a database table. Input is a specified column of the database table, and output is a number of different values in this column.
Cardinality: input of Cardinality is a query condition of several columns on a database table, and a returned result is how many rows of results may be found under such a query condition. For example, an employee table in a database includes the following fields: employee ID, department ID, name and salary. If the query condition is "department ID = 5", then Cardinality is a number of rows returned in the query result, that is, a number of employees whose department ID is 5. The input is the query conditions on the table, and the output is a number of rows of results that meet these conditions.

At present, a relational database management system occupies a key position in the field of computer programming and is a basic supporting technology for the efficient operation of numerous applications. As an extremely widely used open-source relational database at present, the MySQL database plays an indispensable role in the informatization construction of all walks of life. Whether it is a relatively complex analytical SQL (Structured Query Language) operation or a high-concurrency transactional SQL processing, it is highly dependent on the stable operation and performance of the MySQL database.

The indexing technology, as a core SQL optimization strategy, is of great significance in improving database query efficiency. An index is essentially a special data structure that may sort and store one or more columns of data in a database table, so that when executing an SQL query, a database management system may use the index to quickly locate data records that meet query conditions without performing a full-table scan on the entire data table, thereby significantly reducing the time overhead required for the SQL query and effectively optimizing the overall performance of the MySQL database. Therefore, users and database administrators (DBAs) often create appropriate indexes to achieve this optimization goal.

However, creating an index is not easy. An inappropriate index not only fails to improve performance, but also increases the overhead of data insertion and update, and may even reduce the query speed. A key task in database optimization is to evaluate the performance impact of different index configurations under an actual workload. This evaluation is usually performed by means of the "what-if analysis" technology. The what-if analysis simulates various possible index configurations, predicts the impact of the index configurations on query performance, and then finds out an optimal index scheme. This process requires frequent creation and deletion of candidate indexes and evaluation of the effects of the candidate indexes.

The what-if analysis technology requires that the effect of index creation may be evaluated with low resource consumption and time cost. However, it is not feasible to directly create and delete an index in an online MySQL database to evaluate the effect of the index, mainly for the following two reasons:
1. Index time-consuming problem: the what-if analysis technology usually requires dozens or even hundreds of index creation and deletion operations to comprehensively evaluate the advantages and disadvantages of different index strategies. In an actual database environment, a data table of the database to be optimized often has a large scale, and a single index creation operation may take several minutes or even dozens of minutes, such a long time cost is unbearable for an online business that requires a quick response.
2. Stability risk: the process of creating an index will cause the database table to be locked and occupy a large amount of computing resources of the database, which will inevitably have a serious impact on the business running online, and may lead to response delay or even interruption of the business, thereby affecting user experience and normal operation of the business.

The inventors have found in research that database services still face the following three kinds of main challenges.
1. The MySQL database still does not support the virtual indexing technology.
2. Risk of non-disaggregated operation: the current virtual indexing technology usually requires direct operation in an original database by adopting a non-disaggregated manner. Specifically, the virtual indexing technology is usually to directly perform operations on the original database through a user-defined function. This non-disaggregated operation mode has two significant problems: on the one hand, direct operation on the original database has a potential risk of affecting the stability and security of the online business, and improper operation may lead to serious consequences such as data loss and business interruption; on the other hand, at present, the virtual indexing technology mainly relies on open-source plugins provided by third parties, and due to the open-source characteristics of these plugins, their security and stability are difficult to be fully guaranteed, which raises great doubts about the security of the virtual indexing technology among users, thus limiting the wide application of the virtual indexing technology to a certain extent.
3. Lack of an open cost evaluation interface: the effectiveness of the what-if analysis technology depends largely on the accuracy of query cost evaluation by a virtual index, and the accuracy of the query cost evaluation is highly dependent on the precise estimation of statistical items such as the estimation of the number of distinct values (NDV) and cardinality estimation. Although a large number of advanced cardinality and NDV estimation techniques have been proposed in the research field, the virtual indexing technology does not provide an open and extensible interface, making it difficult to integrate these advanced estimation techniques into an actual SQL optimization task. Taking Postgres as an example, researchers cannot directly inject NDV and cardinality information through the virtual index plugins, but have to inject this key information by means of other plugins or forcibly modifying system tables. This complex and non-standard operation mode is only applicable to experimental scenarios in academic research, and cannot meet the strict requirements of online businesses for stability and security, thus greatly limiting the application effect and value of the virtual indexing technology in an actual production environment.

Based on the limitations of the above background, the present invention aims to propose a new separable and easily extensible virtual indexing technology for the MySQL database, to fill the gap of the MySQL database in the field of virtual indexes, and solve problems such as the risk of centralized operation and lack of an open interface in the virtual indexing technology, so as to provide a more efficient, secure and flexible solution for the optimization of the MySQL database.

Correspondingly, specific steps include: creating, in response to a database receiving a query request for target data, a plurality of candidate query plans corresponding to the query request, where each of the candidate query plans includes an execution strategy for querying index information of the target data; invoking, for each piece of index information in each of the candidate query plans, a virtual index plugin configured in the database to send a cost estimation request to a cost estimation service, where the cost estimation request is used to request the cost estimation service to estimate, for the index information, statistical information required for evaluating an index cost; determining, according to the statistical information required for evaluating the index cost and estimated by the cost estimation service through simulating a real index according to database basic statistical information in response to the cost estimation request for each piece of index information, a query cost of each of the candidate query plans; and determining, from the plurality of candidate query plans, a target query plan of which query cost meets a preset condition, and controlling execution of the target query plan.

In the technical scheme, for each candidate query plan, a cost estimation request is sent to a cost estimation service through a pre-configured virtual index plugin, and a query cost of each candidate query plan is determined through statistical information required for evaluating an index cost and estimated by the cost estimation service. Since the speed of the statistical information estimated by the cost estimation service through simulating a real index according to database basic statistical information is fast, and there is no need to create index information, the efficiency of determining the query cost of the candidate query plan is improved, thereby improving the data processing efficiency of the database.

The following explains the application scenarios of the embodiments of the present disclosure.

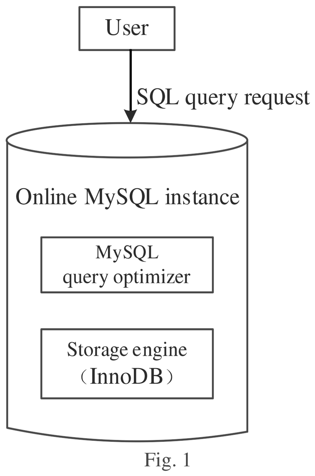

The database data processing method provided in at least one embodiment of the present disclosure may be applied to scenarios of optimizing query requests for various types of databases. Fig. 1 is a schematic diagram of an application scenario of a database data processing method provided in at least one embodiment of the present disclosure. As shown in Fig. 1, the database may be a MySQL database. A user may send an SQL query (such as querying data in a table) to an online MySQL database instance. When the MySQL database executes the SQL query, the SQL query is first sent to a "query optimizer". The query optimizer evaluates query costs of multiple possible candidate query plans (such as whether to use an index and how to connect tables), and then selects a target query plan execution scheme with an optimal query cost. Finally, the execution scheme is sent to an underlying storage engine (for example, an InnoDB storage engine), and the storage engine is responsible for performing specific data search and processing according to the execution scheme.

The following is a specific implementation process of the database data processing method and the related device according to at least one embodiment of the present disclosure, and some examples are only examples and not limitations. An execution body of the database data processing method according to at least one embodiment of the present disclosure is an electronic device, which may be a terminal, a server, etc.

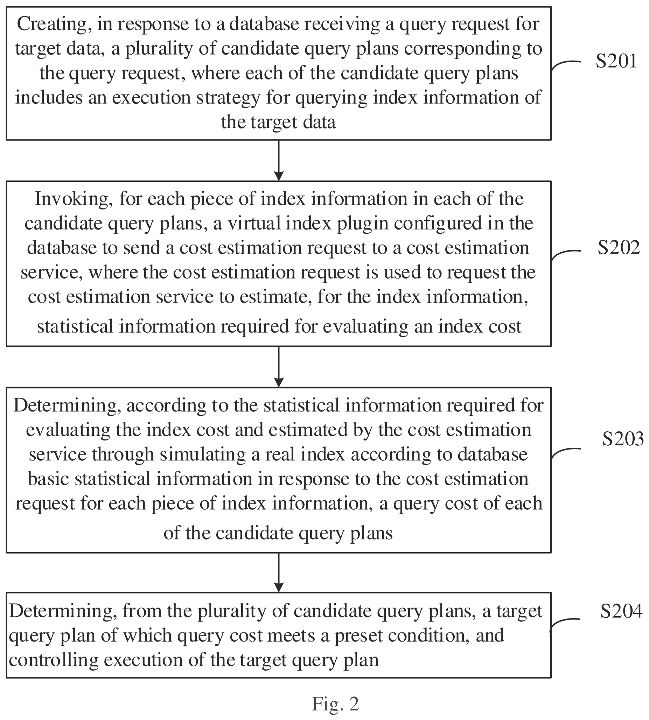

Fig. 2 is a first flowchart of a database data processing method provided in at least one embodiment of the present disclosure. As shown in Fig. 2, the database data processing method may include:

S201, creating, in response to a database receiving a query request for target data, a plurality of candidate query plans corresponding to the query request, where each of the candidate query plans includes an execution strategy for querying index information of the target data.

In at least one embodiment of the present disclosure, a plurality of candidate query plans corresponding to the query request may be created by a query optimizer in the database. Optionally, the execution strategy of the index information includes: whether the index information is used for query, a query condition, and statistical information required for evaluating an index cost.

Exemplarily, an execution strategy of index a is: using index a for query, and a query condition is "b < 3 and c > 5 (column b is less than 3 and column c is greater than 5)". The statistical information required for evaluating the index cost includes the estimation of the number of distinct values (NDV) and cardinality estimation.

S202, invoking, for each piece of index information in each of the candidate query plans, a virtual index plugin configured in the database to send a cost estimation request to a cost estimation service, where the cost estimation request is used to request the cost estimation service to estimate, for the index information, statistical information required for evaluating an index cost.

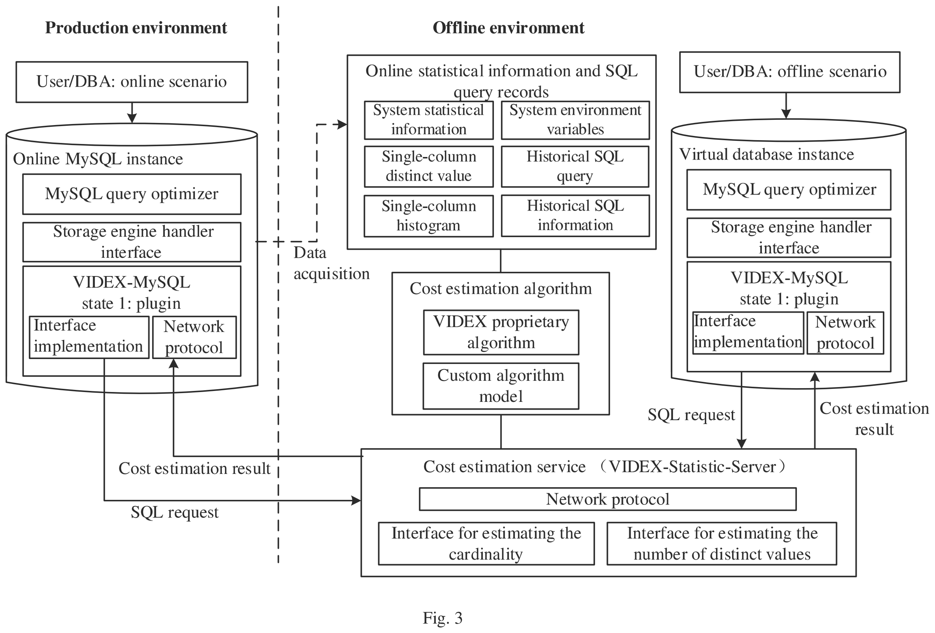

In at least one embodiment of the present disclosure, as shown in Fig. 3, the virtual index plugin and the cost estimation service are pre-configured in the database. Exemplarily, the database is a MySQL database, and in this case, the virtual index plugin and the cost estimation service may be configured in a MySQL instance of the database. The virtual index plugin (storage engine plugin VIDEX-MySQL in Fig. 3) integrated with the MySQL instance may handle some simple information queries. Queries of complex information such as the estimation of the number of distinct values (NDV) and cardinality estimation may be forwarded to an independent cost estimation service (VIDEX-Stats-Server in Fig. 3), and the estimation of the number of distinct values and cardinality estimation are determined by the cost estimation service.

It should be noted that the MySQL instance may be a MySQL database in a production environment or a MySQL database in an offline environment. As shown in Fig. 3, the MySQL database in the production environment has been configured with the VIDEX-MySQL plugin. When the user needs to perform an SQL optimization task on a database, VIDEX is first invoked for initialization. Connection information (user name, password, address, name of the database to be analyzed) of the original database and connection information of VIDEX-MySQL are input. VIDEX creates a virtual database, acquires system statistical information, system environment variables and other information from the original database, and hands them over to the cost estimation service (VIDEX-Statistic-Server). These have little impact on the online database in the production environment and may be completed in constant time (within a few seconds).

The VIDEX algorithm needs to collect some other statistical information of the original database, as shown by dotted lines in Fig. 3. According to the needs of the algorithm, system statistical information, system environment variables, single-column distinct values, single-column histograms, historical SQL statements, historical SQL information, etc. may be collected from the online MySQL database and provided to the cost estimation algorithm and the cost estimation service (VIDEX-Statistic-Server) to be invoked.

Exemplarily, as shown in Fig. 3, a user may initiate an SQL query to an online instance. The database to which the SQL belongs is changed from the online original database to the virtual database, and other details of the SQL query remain unchanged. The user also sets an address of VIDEX-Statistic-Server. The online instance first creates a candidate query plan through the query optimizer, and then invokes the VIDEX-MySQL plugin via a storage engine handler Interface. Then, an algorithm estimation result is requested from the cost estimation service (VIDEX-Statistic-Server) at the specified address through an http interface. The cost estimation service receives the http request and invokes the NDV algorithm interface and the cardinality algorithm interface to reply to the http request.

It should be noted that, as shown in Fig. 3, the cost estimation service may reply to various http requests of the virtual index plugin. Optionally, the cost estimation service may also customize an algorithm model and configure a corresponding algorithm interface to reply to various http requests of the virtual index plugin.

S203, determining, according to the statistical information required for evaluating the index cost and estimated by the cost estimation service through simulating a real index according to database basic statistical information in response to the cost estimation request for each piece of index information, a query cost of each of the candidate query plans.

In at least one embodiment of the present disclosure, query cost is used to characterize execution cost information of a candidate query plan. Optionally, the query cost may include one or more of the followings: a query cost value, query time, the number of queries, query data volume, memory usage, query accuracy, and a query filter rate. The query filter rate is used to represent a proportion of data that meets a query condition.

Optionally, the query cost may be: query data volume and a query filter rate. Correspondingly, this step is: determining, according to the statistical information required for evaluating the index cost and estimated by the cost estimation service through simulating a real index according to database basic statistical information in response to the cost estimation request for each piece of index information, query data volume and a query filter rate of each piece of index information; and determining, according to the query data volume and the query filter rate of each piece of index information, the query cost of each of the candidate query plans.

Optionally, the query cost may be a query cost value. Correspondingly, this step is: determining, according to the statistical information required for evaluating the index cost and estimated by the cost estimation service through simulating a real index according to database basic statistical information in response to the cost estimation request for each piece of index information, a query cost value of each piece of index information; and determining a sum of query cost values of respective pieces of index information in the candidate query plan as the query cost of the candidate query plan.

Optionally, the query cost may be query time. Correspondingly, this step is: determining, according to performance statistical information returned by the cost estimation service, query time of each piece of index information; and determining a sum of query time of respective pieces of index information in the candidate query plan as the query cost information of the candidate query plan.

S204, determining, from the plurality of candidate query plans, a target query plan of which query cost meets a preset condition, and controlling execution of the target query plan.

In at least one embodiment of the present disclosure, the preset condition may be an optimal query plan. For example, if the query cost is the query cost value, the optimal query plan is: a query plan with a smallest query cost value. For another example, if the query cost is the query time, the optimal query plan is: a query plan with shortest query time. For another example, if the query cost is the query accuracy, the optimal query plan is: a query plan with highest query accuracy.

At least one embodiment of the present disclosure provides a database data processing method including: creating, in response to a database receiving a query request for target data, a plurality of candidate query plans corresponding to the query request, where each of the candidate query plans includes an execution strategy for querying index information of the target data; invoking, for each piece of index information in each of the candidate query plans, a virtual index plugin configured in the database to send a cost estimation request to a cost estimation service, where the cost estimation request is used to request the cost estimation service to estimate, for the index information, statistical information required for evaluating an index cost; determining, according to the statistical information required for evaluating the index cost and estimated by the cost estimation service through simulating a real index according to database basic statistical information in response to the cost estimation request for each piece of index information, a query cost of each of the candidate query plans; and determining, from the plurality of candidate query plans, a target query plan of which query cost meets a preset condition, and controlling execution of the target query plan. In the technical scheme, for each candidate query plan, a cost estimation request is sent to a cost estimation service through a pre-configured virtual index plugin, and a query cost of each candidate query plan is determined through statistical information required for evaluating an index cost and estimated by the cost estimation service. Since the speed of the statistical information estimated by the cost estimation service through simulating a real index according to database basic statistical information is fast, and there is no need to create index information, the efficiency of determining the query cost of the candidate query plan is improved, thereby improving the data processing efficiency of the database.

It should be noted that when the database receives the query request for the target data, if the index information is created on the original database instance, it will inevitably introduce influence on the online database. Therefore, the present disclosure proposes a separable MySQL virtual engine storage architecture: first, using table creation information of a plurality of data tables in an online database to create a plurality of offline virtual data tables, and then creating a plurality of pieces of index information corresponding to the query request through the offline virtual data tables.

In some embodiments, before creating, in response to the database receiving the query request for the target data, the plurality of candidate query plans corresponding to the query request, the method further includes: acquiring table creation information of a plurality of data tables, where the database includes the plurality of data tables; creating, according to the table creation information of the plurality of data tables, a plurality of virtual data tables corresponding to the database; and configuring a plurality of pieces of index information associated with the plurality of virtual data tables, where the index information includes an index identification, a virtual data table to be queried, at least one query column in the virtual data table to be queried, and a query condition for each query column.

Further, in order to ensure that there is no impact on the online database, our virtual index scheme does not directly create an index on the original database, but creates a new "virtual database table", and then creates an index on the virtual database table. It should be noted that the only difference between the virtual data table and the original data table is that the original index plugin is changed to a virtual index plugin (VIDEX plugin in Fig. 3). When executing an SQL query, the SQL query is no longer sent to the original data table, but to the virtual data table. Moreover, when an upper-layer query optimizer determines that an underlying query engine is the VIDEX plugin, it invokes the VIDEX plugin and sends an http request to the cost estimation service through the VIDEX plugin.

In at least one embodiment of the present disclosure, the virtual database table may be created on an independent MySQL instance without operating on the online database. The separable architecture design ensures that the creation and evaluation process of the virtual index will not interfere with the stable operation of online services, thereby improving the stability of online services.

In at least one embodiment of the present disclosure, in order to meet a unique requirement of the MySQL database for virtual indexes (not only modifying index definitions, but also requesting index-related information), a storage engine interface of the MySQL database is implemented to receive query requests from the MySQL database for index information, and an algorithm is used to simulate relevant information of a real index. For example, the MySQL database may query an index what the NDV of several columns on a certain table is. At this time, the algorithm may estimate the NDV and return the result without actually creating the index.

In some embodiments, the statistical information required for evaluating the index cost includes a number of distinct values and a number of rows of a query result set; the virtual index plugin includes a request interface for the number of distinct values and a request interface for the number of rows of the query result set, where the invoking the virtual index plugin configured in the database to send the cost estimation request to the cost estimation service includes: invoking the request interface for the number of distinct values in the virtual index plugin configured in the database to send, in a preset network protocol, an estimation request for the number of distinct values to the cost estimation service; and invoking the request interface for the number of rows of the query result set in the virtual index plugin configured in the database to send, in the preset network protocol, an estimation request for the number of rows of the query result set to the cost estimation service, where the preset network protocol includes an http network protocol or a rpc network protocol.

Here, due to the versatility of the http network protocol or the rpc network protocol, all languages have mature toolkits for replying to http requests or rpc requests, so various algorithm requests may be implemented. In this example, the algorithm requests may include a cardinality estimation algorithm request and an NDV estimation algorithm request.

Optionally, there may be a plurality of cost estimation services, each cost estimation service corresponds to one IP address, a target cost estimation service with smallest load may be selected from the plurality of cost estimation services, and an algorithm request is sent to the IP address corresponding to the target cost estimation service.

In at least one embodiment of the present disclosure, by using an environment variable setting mechanism at a session level of the MySQL database, VIDEX-MySQL may be freely instructed to send an algorithm request to a cost estimation service corresponding to which IP address.

Optionally, in order to further simplify the algorithm server, a cost estimation service may be built using the Python language to receive and preprocess requests, and then hand them over to a Python interface to answer. In this case, it is no longer necessary for the cost estimation service to process the entire http request, and it is only need to write an algorithm implementation class that inherits the Python interface in the cost estimation service. Exemplarily, as shown in Fig. 3, the above Python interface may include an interface for estimating the number of distinct values and a cardinality estimation interface.

In some embodiments, the step in which the cost estimation server processes the entire http request may include: in response to the cost estimation service receiving the estimation request for the number of distinct values, invoking, through the interface for estimating the number of distinct values on the cost estimation service, an estimation function for the number of distinct values; and simulating, through the estimation function for the number of distinct values, the real index according to the database basic statistical information to determine the number of distinct values corresponding to the index information; and

in response to the cost estimation service receiving the estimation request for the number of rows of the query result set, invoking, through the cardinality estimation interface on the cost estimation service, a cardinality estimation function; and simulating, through the cardinality estimation function, the real index according to the database basic statistical information to determine the number of rows of the query result set corresponding to the index information.

It should be noted that in some query request scenarios, the MySQL virtual index needs a multi-column NDV algorithm and a multi-column cardinality algorithm to take effect.

In some embodiments, for a single-column NDV, a number of different values of each column in the database needs to be calculated. At this time, this may be completed by executing an SQL query of "counting the number of different values" on each column. It should be noted that if only part of the data is available (such as sampled data), this calculation may also be performed only on this part of the data.

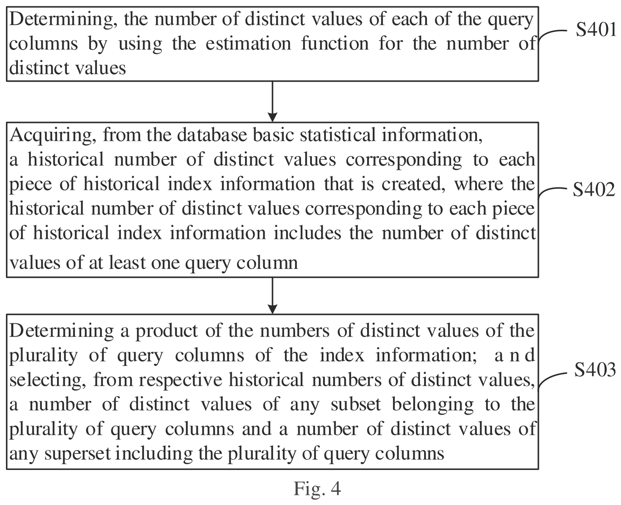

In some other embodiments, the index information includes a plurality of query columns on which query operations are required to be performed; and as shown in Fig. 4, where the simulating, through the estimation function for the number of distinct values, the real index according to the database basic statistical information to determine the number of distinct values corresponding to the index information includes the following steps S401 to S404.

S401, determining, the number of distinct values of each of the query columns by using the estimation function for the number of distinct values.

Optionally, NDV data of all single columns of a specified relational table: exists_single_ndvs may be acquired by SELECT COUNT(DISTINCT). If there is sampled data, the single-column NDV data may be calculated only on the sampled data.

S402, acquiring, from the database basic statistical information, a historical number of distinct values corresponding to each piece of historical index information that is created, where the historical number of distinct values corresponding to each piece of historical index information includes the number of distinct values of at least one query column.

Optionally, multi-column NDV data of created index may be acquired through the innodb_index_stats system table and recorded as exists_multi_col_ndvs, for example: the NDV of columns {c1,c2} is 8; the NDV of columns {c2,c3} is 10; the NDV of columns {c2,c3,c4} is 20; and the NDV of columns {c2,c3,c4,c5} is 20.

S403, determining a product of the numbers of distinct values of the plurality of query columns of the index information; and selecting, from respective historical numbers of distinct values, a number of distinct values of any subset belonging to the plurality of query columns and a number of distinct values of any superset including the plurality of query columns.

Exemplarily, for the request get_ndv(table_name, column_list), for example, the plurality of query columns (column_list) are c2, c3 and c5. For ease of statistics, the product of the numbers of distinct values of the plurality of query columns may be defined as a basic NDV. For example, if single-column NDVs of the query columns c2, c3 and c5 are 4, 5, and 6, respectively, the basic NDV is calculated as: 4*5*6=120.

A subset of column_list is searched for from exists_multi_col_ndvs. For example, {c2,c3}:10.

A superset of column_list is searched for from exists_multi_col_ndvs. For example, {c2,c3,c4,c5}:20.

S404, determining a median number of the product, the number of distinct values of the any subset, and the number of distinct values of the any superset, and determining the median number as the number of distinct values corresponding to the index information.

Optionally, the determining the median number of the product, the number of distinct values of the any subset, and the number of distinct values of the any superset includes: selecting, from the product and the number of distinct values of the any subset, a first number of distinct values with a larger numerical value; selecting, from the first number of distinct values and the number of distinct values of the any superset including the plurality of query columns, a second number of distinct values with a smaller numerical value; and determining the second number of distinct values as the median number.

Exemplarily, a calculation formula for the median number is: min(max(ndv_min,ndv_base), ndv_max).

In at least one embodiment of the present disclosure, an algorithm for constructing a multi-column NDV based on a single-column NDV is used, and the created index information of MySQL is used for further correction to improve the accuracy of the multi-column NDV.

The following is an illustration through a specific example. Suppose that we need to calculate an NDV containing a specific column combination, for example, the plurality of query columns are c2, c3, and c5. Correspondingly, steps of determining the combined NDV are as follows.

Step 1, determining an NDV lower bound: searching for NDV records of any subset belonging to the plurality of query columns from the known multi-column NDVs. The maximum NDV in these records is taken as the lower bound of the NDV of the plurality of query columns. For example, the NDV of a column combination c2, c3 is 10 and may be used as a lower bound for calculating the NDV of the plurality of query columns (c2, c3, c5).

The known multi-column NDVs may be represented as: exists_multi_col_ndvs, and the plurality of query columns may be represented as: column_list. A subset of column_list is searched for from exists_multi_col_ndvs. If there is a subset NDV record {c2,c3}:10 in exists_multi_col_ndvs, then the NDV lower bound ndv_min of the plurality of query columns is equal to 10.

Step 2, determining an NDV upper bound: similarly, searching for NDV records of any superset containing the requested column set from the known multi-column NDVs. The minimum NDV in these records is taken as the upper bound of the NDV. For example, if the NDV of a column combination c2, c3, c4, c5 is 20, this may be used as an upper bound of the NDV of the requested column set (c2, c3, c5).

The known multi-column NDVs may be represented as: exists_multi_col_ndvs, and the plurality of query columns may be represented as: column_list. A superset of column_list is scarched for from exists_multi_col_ndvs. If there is a superset NDV record {c2,c3,c4,c5}:20 in exists_multi_col_ndvs, then the NDV upper bound ndv_max of the plurality of query columns is equal to 20.

Step 3, determining basic NDV estimation: multiplying single-column NDVs of each of the requested columns. This gives an NDV estimate based on an assumption of single-column independence. For example, if the single-column NDVs of the requested column set c2, c3, c5 are 4, 5, and 6, respectively, the single-column NDV of each column are multiplied, and the basic NDV is calculated as: 4*5*6=120.

Step 4,determining a final NDV: taking a median of the above three values (the NDV lower bound, the basic NDV estimation, and the NDV upper bound) as the final NDV estimate.

Through the above steps, the different number of distinct values under the complex column combination may be effectively estimated, which is crucial for database query optimization.

It should be noted that in some query request scenarios, the cardinality may also involve multiple columns, and unlike the NDV, the cardinality varies with the SQL query condition. For example, for the same cardinality requests of columns cl and c2, the cardinalities for the condition "c1>5 and c2=1" and the condition "c1>10 and c2=2" are different.

In at least one embodiment of the present disclosure, a multi-column cardinality algorithm based on a single-column histogram may be constructed. First, the histogram information created in the database is acquired, and these histograms may be helpful for quickly estimating the data distribution. For a column in the database table without created histogram, a new histogram needs to be created. If sampled data exists in the database, these histograms may be created and acquired only based on the sampled data.

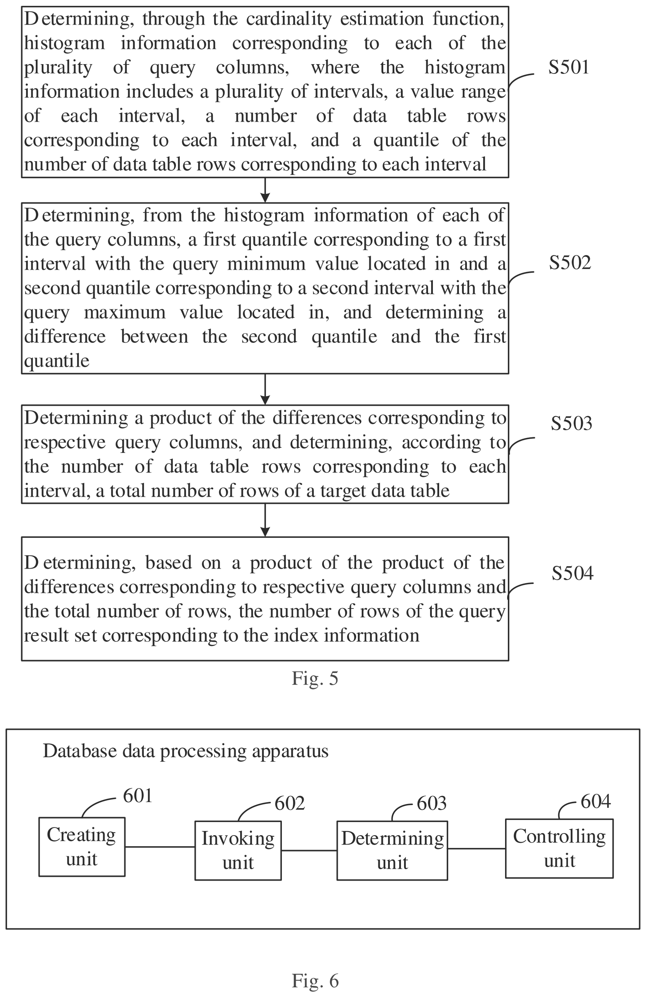

Optionally, the database includes a plurality of data tables, the index information includes a query range of a plurality of query columns, and the query range includes a query minimum value and a query maximum value; and as shown in Fig. 5, where the simulating, through the cardinality estimation function, the real index according to the database basic statistical information to determine the number of rows of the query result set corresponding to the index information includes the following steps.

S501, determining, through the cardinality estimation function, histogram information corresponding to each of the plurality of query columns, where the histogram information includes a plurality of intervals, a value range of each interval, a number of data table rows corresponding to each interval, and a quantile of the number of data table rows corresponding to each interval.

Optionally, a number of the plurality of intervals and the value range of each interval in the histogram information corresponding to each query column may be preset. For example, the query column is age. The number of the plurality of intervals may be set to 100, and the value range of each interval may be set to 1. Further, the number of data table rows corresponding to each age from 1 to 100 may be obtained from the number of data table rows corresponding to each interval. The quantile of the number of data table rows corresponding to each age from 1 to 100 may be obtained from the quantile of the number of data table rows corresponding to each interval.

S502, determining, from the histogram information of each of the query columns, a first quantile corresponding to a first interval with the query minimum value located in and a second quantile corresponding to a second interval with the query maximum value located in, and determining a difference between the second quantile and the first quantile.

For example, the query column is age. The query minimum value is 40, and the query maximum value is 50. The first quantile corresponding to the first interval in which 40 is located and the second quantile corresponding to the second interval in which 50 is located are determined from the histogram information of the query column.

S503, determining a product of the differences corresponding to respective query columns, and determining, according to the number of data table rows corresponding to each interval, a total number of rows of a target data table.

Optionally, the total numbers of rows of the target data table corresponding to each query column are the same; therefore, the total number of rows of the target data table may be determined from the number of data table rows corresponding to each interval in the histogram information corresponding to any query column.

S504, determining, based on a product of the product of the differences corresponding to respective query columns and the total number of rows, the number of rows of the query result set corresponding to the index information.

It should be noted that before the calculation, the cardinality (the number of rows of the query result set) needs to be initialized, which will be illustrated through a specific example below.

Step 1, initializing the cardinality: at the beginning, setting an initial value of the cardinality to 1 for accumulating to calculate a final result.

Optionally, the created histogram of MySQL is acquired by SELECT HISTOGRAM. Histograms are created for the remaining single columns of the relational table by UPDATE HISTOGRAM. If there is sampled data, the histograms may be created and acquired only on the sampled data.

Step 2, traversing a query boundary: for each column in a given query range min_bound and max_bound, setting an upper bound and a lower bound of the column to c_max and c_min, respectively.

The following steps are executed for each column.
(1) Querying the histogram: using the histogram to search for quantiles corresponding to c_min and c_max. These two quantiles represent relative positions of the values c_min and c_max in the data distribution.
(2) Calculating a contribution of the column: calculating a proportion of data from c_min to c_max in total data, that is, (F_max-F_min), where F_min and F_max are the quantiles of c_min and c_max, respectively.
(3) Determining a product of the proportions corresponding to respective query columns and the total number of rows of the target data table.
(4) Multiplying the product by the total number of rows of the target data table to obtain the cardinality value corresponding to the index information.

It should be noted that, according to the needs of the algorithm, it is necessary to collect system statistical information, system environment variables, single-column distinct values, single-column histograms, historical SQL statements, historical SQL information, etc. from the online MySQL instance, provide them to the cost estimation algorithm and the cost estimation service (VIDEX-Statistic-Server) to be invoked. As shown in Fig. 3, the description of the VIDEX architecture module is specifically as follows: VIDEX, a virtual indexing technology for the MySQL database, includes a VIDEX-MySQL module for accepting requests and generating candidate query plans, and a VIDEX-Statistic-Server module that provides necessary NDV estimation, cardinality estimation, and other statistical information to VIDEX-MySQL. VIDEX-MySQL may be configured as a plugin to an online MySQL instance or started separately, inherit and implement the storage engine interface of the MySQL database, and handle index requests and query requests. VIDEX includes a storage engine plugin VIDEX-MySQL and a cost estimation service VIDEX-Statistic-Server.

Exemplarily, the storage engine plugin VIDEX-MySQL and the cost estimation service VIDEX-Statistic-Server are described in detail in conjunction with the content shown in Fig. 3.
1. Storage engine plugin VIDEX-MySQL: VIDEX-MySQL has two deployment modes. Users may configure the VIDEX plugin into an online MySQL instance or start a MySQL instance pre-configured with the VIDEX plugin separately. In the production environment, the user configures VIEDX-MySQL as a plugin into the online MySQL instance. In the offline environment, the user starts a separate MySQL instance that has been configured with the VIDEX-MySQL plugin.
   Functionally, the VIDEX plugin inherits and implements the storage engine handler Interface exposed by the MySQL database. It contains more than 90 interface functions, including requests for statistical information (such as the number of table rows, disk size, memory loading rate, etc.), requests for NDV, requests for cardinality, etc. When VIDEX-MySQL receives a query request, a query optimizer generates candidate query plans for the SQL. The generation process requires NDV estimation, cardinality estimation, etc., and these requests are handed over to VIDEX-MySQL and then forwarded to VIDEX-Statistic-Server.
2. Cost estimation service VIDEX-Statistic-Server: the cost estimation service calculates the NDV and cardinality based on the collected statistical information and estimation algorithm, and returns them to the VIDEX-MySQL instance. A candidate query plan for an SQL and a cost estimate for each step of the query may be given without real data. VIDEX-Statistic-Server encapsulates a series of standardized interfaces for the VIDEX Model to implement.
   The VIDEX-Statistic-Server module provides standardized interfaces for the VIDEX-Model to implement, including a get_cardinality interface for acquiring a cardinality estimate within a specified condition range, a get_ndv interface for acquiring the numbers of distinct values (NDV) of multiple columns of a specified table, and a get_index_cached_pct interface for acquiring a cache percentage of a specified index and related columns. These interfaces facilitate data acquisition and model training by the VIDEX-Model, thereby improving the accuracy of cost estimation.
3. VIDEX proprietary algorithm: the cost estimation service calculates the NDV and cardinality based on statistical information collected from the original database and the user's historical query records. This part is responsible for collecting data, training models, and then implementing interfaces such as NDV and cardinality provided by VIDEX-Statistic-Server. Specifically, the NDV of a single column and NDV of existing multi-column index may be acquired in advance, and the NDV of any column combination may be estimated in the get_ndv interface in combination with information such as a subset, a superset, and a product of single-column NDVs. And using a single-column histogram, the cardinality of a given condition is recursively estimated in get_cardinality. This implementation may give a basically available cost estimate without a large amount of sampled data.
4. The VIDEX proprietary algorithm does not use the original data of the online MySQL instance, but may use the statistical information and historical sql query records of the online MySQL instance. Therefore, algorithm researchers or database developers may collect information from the online to assist the algorithm execution as basic data for the cost estimation algorithm (NDV and cardinality).

Fig. 6 is a schematic structural diagram of a database data processing apparatus according to at least one embodiment of the present disclosure. As shown in Fig. 6, the data processing apparatus includes:
a creating unit 601, configured to create, in response to a database receiving a query request for target data, a plurality of candidate query plans corresponding to the query request, where each of the candidate query plans includes an execution strategy for querying index information of the target data;
an invoking unit 602, configured to invoke, for each piece of index information in each of the candidate query plans, a virtual index plugin configured in the database to send a cost estimation request to a cost estimation service, where the cost estimation request is used to request the cost estimation service to estimate, for the index information, statistical information required for evaluating an index cost;
a determining unit 603, configured to determine, according to the statistical information required for evaluating the index cost and estimated by the cost estimation service through simulating a real index according to database basic statistical information in response to the cost estimation request for cach piece of index information, a query cost of each of the candidate query plans; and
a controlling unit 604, configured to determine, from the plurality of candidate query plans, a target query plan of which query cost meets a preset condition, and control execution of the target query plan.

According to one or more embodiments of the present disclosure, before creating, in response to the database receiving the query request for the target data, the plurality of candidate query plans corresponding to the query request, the apparatus further includes: an index configuration unit, where the index configuration unit is configured to acquire table creation information of a plurality of data tables, where the database includes the plurality of data tables; create, according to the table creation information of the plurality of data tables, a plurality of virtual data tables corresponding to the database; and configure a plurality of pieces of index information associated with the plurality of virtual data tables, where the index information includes an index identification, a virtual data table to be queried, at least one query column in the virtual data table to be queried, and a query condition for each query column.

According to one or more embodiments of the present disclosure, the statistical information required for evaluating the index cost includes a number of distinct values and a number of rows of a query result set; the virtual index plugin includes a request interface for the number of distinct values and a request interface for the number of rows of the query result set; and where the invoking unit 602 invokes the virtual index plugin configured in the database to send the cost estimation request to the cost estimation service includes: invoking the request interface for the number of distinct values in the virtual index plugin configured in the database to send, in a preset network protocol, an estimation request for the number of distinct values to the cost estimation service; and invoking the request interface for the number of rows of the query result set in the virtual index plugin configured in the database to send, in the preset network protocol, an estimation request for the number of rows of the query result set to the cost estimation service, where the preset network protocol includes an http network protocol or a rpc network protocol.

According to one or more embodiments of the present disclosure, the determining unit 603 is configured to: in response to the cost estimation service receiving the estimation request for the number of distinct values, invoke, through the interface for estimating the number of distinct values on the cost estimation service, an estimation function for the number of distinct values; and simulate, through the estimation function for the number of distinct values, the real index according to the database basic statistical information to determine the number of distinct values corresponding to the index information.

According to one or more embodiments of the present disclosure, the index information includes a plurality of query columns on which query operations are required to be performed; and where the determining unit 603 simulates, through the estimation function for the number of distinct values, the real index according to the database basic statistical information to determine the number of distinct values corresponding to the index information includes: determining, the number of distinct values of each of the query columns by using the estimation function for the number of distinct values; acquiring, from the database basic statistical information, a historical number of distinct values corresponding to cach piece of historical index information that is created, where the historical number of distinct values corresponding to each piece of historical index information includes the number of distinct values of at least one query column; determining a product of the numbers of distinct values of the plurality of query columns of the index information, and selecting, from respective historical numbers of distinct values, a number of distinct values of any subset belonging to the plurality of query columns and a number of distinct values of any superset including the plurality of query columns; and determining a median number of the product, the number of distinct values of the any subset, and the number of distinct values of the any superset, and determining the median number as the number of distinct values corresponding to the index information.

According to one or more embodiments of the present disclosure, the determining unit 603 determines the median number of the product, the number of distinct values of the any subset, and the number of distinct values of the any superset includes: selecting, from the product and the number of distinct values of the any subset, a first number of distinct values with a larger numerical value; selecting, from the first number of distinct values and the number of distinct values of the any superset including the plurality of query columns, a second number of distinct values with a smaller numerical value; and determining the second number of distinct values as the median number.

According to one or more embodiments of the present disclosure, the determining unit 603 is further configured to: in response to the cost estimation service receiving the estimation request for the number of rows of the query result set, invoke, through the cardinality estimation interface on the cost estimation service, a cardinality estimation function; and simulate, through the cardinality estimation function, the real index according to the database basic statistical information to determine the number of rows of the query result set corresponding to the index information.

According to one or more embodiments of the present disclosure, the database includes a plurality of data tables, the index information includes a query range of a plurality of query columns, and the query range includes a query minimum value and a query maximum value; and correspondingly, the determining unit 603 simulates, through the cardinality estimation function, the real index according to the database basic statistical information to determine the number of rows of the query result set corresponding to the index information includes: determining, through the cardinality estimation function, histogram information corresponding to each of the plurality of query columns, where the histogram information includes a plurality of intervals, a value range of each interval, a number of data table rows corresponding to each interval, and a quantile of the number of data table rows corresponding to each interval; determining, from the histogram information of each of the query columns, a first quantile corresponding to a first interval with the query minimum value located in and a second quantile corresponding to a second interval with the query maximum value located in, and determining a difference between the second quantile and the first quantile; determining a product of the differences corresponding to respective query columns, and determining, according to the number of data table rows corresponding to each interval, a total number of rows of a target data table; and determining, based on a product of the product of the differences corresponding to respective query columns and the total number of rows, the number of rows of the query result set corresponding to the index information.

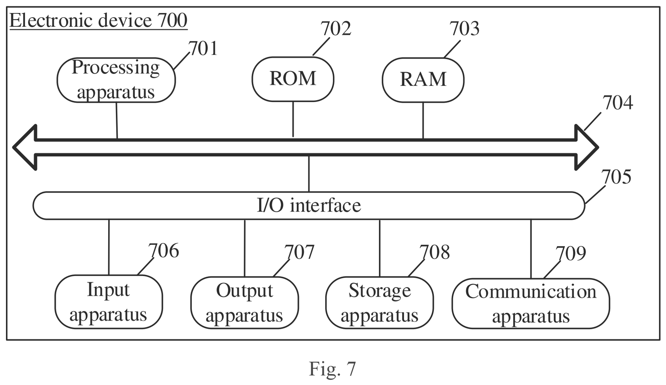

Referring to Fig. 7, Fig. 7 shows a schematic structural diagram of an electronic device 700 suitable for implementing at least one embodiment of the present disclosure, and the electronic device 700 may be a terminal device or a server. The terminal device may include, but is not limited to, mobile terminals such as a mobile phone, a notebook computer, a digital broadcast receiver, a personal digital assistant (abbreviated as PDA), a tablet computer, a portable media player (abbreviated as PMP), a vehicle-mounted terminal (such as a vehicle navigation terminal), etc., and stationary terminals such as a digital TV, a desktop computer, etc. The electronic device shown in Fig. 7 is only an example, and should not impose any limitation on the functions and scope of use of at least one embodiment of the present disclosure.

As shown in Fig. 7, the electronic device 700 may include a processing apparatus 701 (e.g., a central processing unit, a graphics processing unit, etc.), which may perform various appropriate actions and processing according to a program stored in a read-only memory (abbreviated as ROM) 702 or a program loaded from a storage apparatus 708 into a random access memory (abbreviated as RAM) 703. The RAM 703 further stores various programs and data required for the operation of the electronic device 700. The processing apparatus 701, the ROM 702, and the RAM 703 are interconnected by means of a bus 704. An input/output (I/O) interface 705 is also connected to the bus 704.

Usually, the following apparatuses may be connected to the I/O interface 705: an input apparatus 706 including, for example, a touch screen, a touchpad, a keyboard, a mouse, a camera, a microphone, an accelerometer, a gyroscope, etc.; an output apparatus 707 including, for example, a liquid crystal display (abbreviated as LCD), a speaker, a vibrator, etc.; a storage apparatus 708 including, for example, a magnetic tape, a hard disk, etc.; and a communication apparatus 709. The communication apparatus 709 may allow the electronic device 700 to perform wireless or wired communication with other devices to exchange data. Although Fig. 7 shows the electronic device 700 with various apparatuses, it should be understood that it is not required to implement or have all of the shown apparatuses. More or fewer apparatuses may be implemented or provided alternatively.

In particular, according to at least one embodiment of the present disclosure, the process described above with reference to the flowchart may be implemented as a computer software program. For example, at least one embodiment of the present disclosure includes a computer program product, which includes a computer program carried on a computer-readable medium, where the computer program contains program code for executing the method shown in the flowchart. In such embodiments, the computer program may be downloaded and installed from a network through the communication apparatus 709, or installed from the storage apparatus 708, or installed from the ROM 702. When the computer program is executed by the processing apparatus 701, the foregoing functions defined in the method of at least one embodiment of the present disclosure are executed.

It should be noted that the foregoing computer-readable medium in the present disclosure may be a computer-readable signal medium, a computer-readable storage medium, or any combination thereof. The computer-readable storage medium may be, for example, but not limited to, an electrical, magnetic, optical, electromagnetic, infrared, or semiconductor system, apparatus or device, or any combination thereof. More specific examples of the computer-readable storage medium may include, but are not limited to: an electrically connected portable computer disk with one or more wires, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, a computer-readable storage medium may be any tangible medium that contains or stores a program, and the program may be used by or in combination with an instruction execution system, apparatus or device. In the present disclosure, a computer-readable signal medium may include a data signal propagated in a baseband or as a part of a carrier wave, and computer-readable program code is carried therein. This propagated data signal may take many forms, including but not limited to, an electromagnetic signal, an optical signal, or any suitable combination thereof. The computer-readable signal medium may also be any computer-readable medium other than the computer-readable storage medium, and the computer-readable signal medium may send, propagate or transmit the program used by or in combination with the instruction execution system, apparatus or device. The program code contained on the computer-readable medium may be transmitted in any suitable medium, including but not limited to: a wire, an optical cable, RF (radio frequency), etc., or any suitable combination thereof.

The foregoing computer-readable medium may be contained in the foregoing electronic device, or may exist alone without being assembled into the electronic device.

The foregoing computer-readable medium carries one or more programs, and when the one or more programs are executed by the electronic device, the electronic device is caused to execute the method shown in the foregoing embodiments.

The computer program code for performing the operations of the present disclosure may be written in one or more programming languages or a combination thereof. The above-mentioned programming languages include object-oriented programming languages such as Java, Smalltalk, C++, and include conventional procedural programming languages such as "C" language or similar programming languages. The program code may be executed entirely on a user's computer, partly executed on a user's computer, executed as an independent software package, partly executed on a user's computer and partly executed on a remote computer, or entirely executed on a remote computer or server. In the case of involving a remote computer, the remote computer may be connected to a user's computer through any kind of network, including a local area network (abbreviated as LAN) or a wide area network (abbreviated as WAN), or it may be connected to an external computer (for example, connected by using Internet provided by an Internet service provider).

The flowcharts and block diagrams in the drawings illustrate the possibly implemented architectures, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in at least one embodiment of the present disclosure may be implemented by means of software, and may also be implemented by means of hardware. The name of a unit does not constitute a limitation on the unit itself under certain circumstances.

The foregoing functions described herein may be performed at least partly by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

According to one or more embodiments of the present disclosure, a database data processing method is provided, including:
creating, in response to a database receiving a query request for target data, a plurality of candidate query plans corresponding to the query request, where each of the candidate query plans includes an execution strategy for querying index information of the target data;
invoking, for each piece of index information in each of the candidate query plans, a virtual index plugin configured in the database to send a cost estimation request to a cost estimation service, where the cost estimation request is used to request the cost estimation service to estimate, for the index information, statistical information required for evaluating an index cost;
determining, according to the statistical information required for evaluating the index cost and estimated by the cost estimation service through simulating a real index according to database basic statistical information in response to the cost estimation request for each piece of index information, a query cost of each of the candidate query plans; and
determining, from the plurality of candidate query plans, a target query plan of which query cost meets a preset condition, and controlling execution of the target query plan.

According to one or more embodiments of the present disclosure, before creating, in response to the database receiving the query request for the target data, the plurality of candidate query plans corresponding to the query request, the method further includes: acquiring table creation information of a plurality of data tables, where the database includes the plurality of data tables; creating, according to the table creation information of the plurality of data tables, a plurality of virtual data tables corresponding to the database; and configuring a plurality of pieces of index information associated with the plurality of virtual data tables, where the index information includes an index identification, a virtual data table to be queried, at least one query column in the virtual data table to be queried, and a query condition for each query column.

According to one or more embodiments of the present disclosure, the statistical information required for evaluating the index cost includes a number of distinct values and a number of rows of a query result set; the virtual index plugin includes a request interface for the number of distinct values and a request interface for the number of rows of the query result set; and where the invoking the virtual index plugin configured in the database to send the cost estimation request to the cost estimation service includes: invoking the request interface for the number of distinct values in the virtual index plugin configured in the database to send, in a preset network protocol, an estimation request for the number of distinct values to the cost estimation service; and invoking the request interface for the number of rows of the query result set in the virtual index plugin configured in the database to send, in the preset network protocol, an estimation request for the number of rows of the query result set to the cost estimation service, where the preset network protocol includes an http network protocol or a rpc network protocol.

According to one or more embodiments of the present disclosure, the method further includes: in response to the cost estimation service receiving the estimation request for the number of distinct values, invoking, through the interface for estimating the number of distinct values on the cost estimation service, an estimation function for the number of distinct values; and simulating, through the estimation function for the number of distinct values, the real index according to the database basic statistical information to determine the number of distinct values corresponding to the index information.

According to one or more embodiments of the present disclosure, the index information includes a plurality of query columns on which query operations are required to be performed; and where the simulating, through the estimation function for the number of distinct values, the real index according to the database basic statistical information to determine the number of distinct values corresponding to the index information includes: determining, the number of distinct values of each of the query columns by using the estimation function for the number of distinct values; acquiring, from the database basic statistical information, a historical number of distinct values corresponding to each piece of historical index information that is created, where the historical number of distinct values corresponding to each piece of historical index information includes the number of distinct values of at least one query column; determining a product of the numbers of distinct values of the plurality of query columns of the index information, and selecting, from respective historical numbers of distinct values, a number of distinct values of any subset belonging to the plurality of query columns and a number of distinct values of any superset including the plurality of query columns; and determining a median number of the product, the number of distinct values of the any subset, and the number of distinct values of the any superset, and determining the median number as the number of distinct values corresponding to the index information.

According to one or more embodiments of the present disclosure, the determining the median number of the product, the number of distinct values of the any subset, and the number of distinct values of the any superset includes: selecting, from the product and the number of distinct values of the any subset, a first number of distinct values with a larger numerical value; selecting, from the first number of distinct values and the number of distinct values of the any superset including the plurality of query columns, a second number of distinct values with a smaller numerical value; and determining the second number of distinct values as the median number.

According to one or more embodiments of the present disclosure, the method further includes: in response to the cost estimation service receiving the estimation request for the number of rows of the query result set, invoking, through the cardinality estimation interface on the cost estimation service, a cardinality estimation function; and simulating, through the cardinality estimation function, the real index according to the database basic statistical information to determine the number of rows of the query result set corresponding to the index information.

According to one or more embodiments of the present disclosure, the database includes a plurality of data tables, the index information includes a query range of a plurality of query columns, and the query range includes a query minimum value and a query maximum value; and correspondingly, the simulating, through the cardinality estimation function, the real index according to the database basic statistical information to determine the number of rows of the query result set corresponding to the index information includes: determining, through the cardinality estimation function, histogram information corresponding to each of the plurality of query columns, where the histogram information includes a plurality of intervals, a value range of each interval, a number of data table rows corresponding to each interval, and a quantile of the number of data table rows corresponding to each interval; determining, from the histogram information of each of the query columns, a first quantile corresponding to a first interval with the query minimum value located in and a second quantile corresponding to a second interval with the query maximum value located in, and determining a difference between the second quantile and the first quantile; determining a product of the differences corresponding to respective query columns, and determining, according to the number of data table rows corresponding to each interval, a total number of rows of a target data table; and determining, based on a product of the product of the differences corresponding to respective query columns and the total number of rows, the number of rows of the query result set corresponding to the index information.

According to one or more embodiments of the present disclosure, a database data processing apparatus is provided, including:
a creating unit, configured to create, in response to a database receiving a query request for target data, a plurality of candidate query plans corresponding to the query request, where each of the candidate query plans includes an execution strategy for querying index information of the target data;
an invoking unit, configured to invoke, for each piece of index information in each of the candidate query plans, a virtual index plugin configured in the database to send a cost estimation request to a cost estimation service, where the cost estimation request is used to request the cost estimation service to estimate, for the index information, statistical information required for evaluating an index cost;
a determining unit, configured to determine, according to the statistical information required for evaluating the index cost and estimated by the cost estimation service through simulating a real index according to database basic statistical information in response to the cost estimation request for each piece of index information, a query cost of each of the candidate query plans; and
a controlling unit, configured to determine, from the plurality of candidate query plans, a target query plan of which query cost meets a preset condition, and control execution of the target query plan.

According to one or more embodiments of the present disclosure, before creating, in response to the database receiving the query request for the target data, the plurality of candidate query plans corresponding to the query request, the apparatus further includes: an index configuration unit, where the index configuration unit is configured to acquire table creation information of a plurality of data tables, where the database includes the plurality of data tables; create, according to the table creation information of the plurality of data tables, a plurality of virtual data tables corresponding to the database; and configure a plurality of pieces of index information associated with the plurality of virtual data tables, where the index information includes an index identification, a virtual data table to be queried, at least one query column in the virtual data table to be queried, and a query condition for each query column.

According to one or more embodiments of the present disclosure, the statistical information required for evaluating the index cost includes the number of distinct values and the number of rows of a query result set; the virtual index plugin includes a request interface for the number of distinct values and a request interface for the number of rows of the query result set; and where the invoking unit invokes the virtual index plugin configured in the database to send the cost estimation request to the cost estimation service includes: invoking the request interface for the number of distinct values in the virtual index plugin configured in the database to send, in a preset network protocol, an estimation request for the number of distinct values to the cost estimation service; and invoking the request interface for the number of rows of the query result set in the virtual index plugin configured in the database to send, in the preset network protocol, an estimation request for the number of rows of the query result set to the cost estimation service, where the preset network protocol includes an http network protocol or a rpc network protocol.

According to one or more embodiments of the present disclosure, the determining unit is configured to: in response to the cost estimation service receiving the estimation request for the number of distinct values, invoke, through the interface for estimating the number of distinct values on the cost estimation service, an estimation function for the number of distinct values; and simulate, through the estimation function for the number of distinct values, the real index according to the database basic statistical information to determine the number of distinct values corresponding to the index information.

According to one or more embodiments of the present disclosure, the index information includes a plurality of query columns on which query operations are required to be performed; and where the determining unit simulates, through the estimation function for the number of distinct values, the real index according to the database basic statistical information to determine the number of distinct values corresponding to the index information includes: determining, the number of distinct values of each of the query columns by using the estimation function for the number of distinct values; acquiring, from the database basic statistical information, a historical number of distinct values corresponding to each piece of historical index information that is created, where the historical number of distinct values corresponding to each piece of historical index information includes the number of distinct values of at least one query column; determining a product of the numbers of distinct values of the plurality of query columns of the index information, and selecting, from respective historical numbers of distinct values, a number of distinct values of any subset belonging to the plurality of query columns and a number of distinct values of any superset including the plurality of query columns; and determining a median number of the product, the number of distinct values of the any subset, and the number of distinct values of the any superset, and determining the median number as the number of distinct values corresponding to the index information.

According to one or more embodiments of the present disclosure, the determining unit determines the median number of the product, the number of distinct values of the any subset, and the number of distinct values of the any superset includes: selecting, from the product and the number of distinct values of the any subset, a first number of distinct values with a larger numerical value; selecting, from the first number of distinct values and the number of distinct values of the any superset including the plurality of query columns, a second number of distinct values with a smaller numerical value; and determining the second number of distinct values as the median number.

According to one or more embodiments of the present disclosure, the determining unit is further configured to: in response to the cost estimation service receiving the estimation request for the number of rows of the query result set, invoke, through the cardinality estimation interface on the cost estimation service, a cardinality estimation function; and simulate, through the cardinality estimation function, the real index according to the database basic statistical information to determine the number of rows of the query result set corresponding to the index information.

According to one or more embodiments of the present disclosure, the database includes a plurality of data tables, the index information includes a query range of a plurality of query columns, and the query range includes a query minimum value and a query maximum value; and correspondingly, the determining unit simulates, through the cardinality estimation function, the real index according to the database basic statistical information to determine the number of rows of the query result set corresponding to the index information includes: determining, through the cardinality estimation function, histogram information corresponding to each of the plurality of query columns, where the histogram information includes a plurality of intervals, a value range of each interval, a number of data table rows corresponding to each interval, and a quantile of the number of data table rows corresponding to each interval; determining, from the histogram information of each of the query columns, a first quantile corresponding to a first interval with the query minimum value located in and a second quantile corresponding to a second interval with the query maximum value located in, and determining a difference between the second quantile and the first quantile; determining a product of the differences corresponding to respective query columns, and determining, according to the number of data table rows corresponding to each interval, a total number of rows of a target data table; and determining, based on a product of the product of the differences corresponding to respective query columns and the total number of rows, the number of rows of the query result set corresponding to the index information.

According to one or more embodiments of the present disclosure, an electronic device is provided, including: at least one processor and at least one memory;
the at least one memory stores computer-executable instructions; and
the at least one processor executes the computer-executable instructions stored in the at least one memory to cause the at least one processor to perform the database data processing method according to at least one embodiment of the present disclosure.

According to one or more embodiments of the present disclosure, a computer-readable storage medium is provided, where the computer-readable storage medium stores computer-executable instructions, and when a processor executes the computer-executable instructions, the database data processing method according to at least one embodiment of the present disclosure is implemented.

According to one or more embodiments of the present disclosure, a computer program product is provided, including a computer program, where when the computer program is executed by a processor, the database data processing method according to at least one embodiment of the present disclosure is implemented.

The above description is only preferred embodiments of the present disclosure and an explanation of the technical principles employed. Those skilled in the art should understand that the scope of disclosure involved in the present disclosure is not limited to the technical schemes formed by the specific combination of the above-mentioned technical features, and should also cover, without departing from the above-mentioned disclosed concept, other technical schemes formed by any combination of the above-mentioned technical features or their equivalent features. For example, a technical scheme formed by replacing the above features with the technical features with similar functions disclosed in the present disclosure (but not limited thereto) each other.

Additionally, although operations are depicted in a particular order, it should not be understood that these operations are required to be performed in a specific order as illustrated or in a sequential order. Under certain circumstances, multitasking and parallel processing may be advantageous. Likewise, although the above discussion includes several specific implementation details, these should not be interpreted as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combinations.

Although the subject matter has been described in language specific to structural features and/or method logical actions, it should be understood that the subject matter defined in the appended claims is not necessarily limited to the specific features or actions described above. Rather, the specific features and actions described above are merely example forms for implementing the claims.

## Claims

1. A database data processing method, comprising:
creating (S201), in response to a database receiving a query request for target data, a plurality of candidate query plans corresponding to the query request, wherein each of the candidate query plans comprises an execution strategy for querying index information of the target data;
invoking (S202), for each piece of index information in each of the candidate query plans, a virtual index plugin configured in the database to send a cost estimation request to a cost estimation service, wherein the cost estimation request is used to request the cost estimation service to estimate, for the index information, statistical information required for evaluating an index cost;
determining (S203), according to the statistical information required for evaluating the index cost and estimated by the cost estimation service through simulating a real index according to database basic statistical information in response to the cost estimation request for each piece of index information, a query cost of each of the candidate query plans; and
determining (S204), from the plurality of candidate query plans, a target query plan of which query cost meets a preset condition, and controlling execution of the target query plan.

2. The database data processing method according to claim 1, wherein before creating, in response to the database receiving the query request for the target data, the plurality of candidate query plans corresponding to the query request, the method further comprises:
acquiring table creation information of a plurality of data tables, wherein the database comprises the plurality of data tables;
creating, according to the table creation information of the plurality of data tables, a plurality of virtual data tables corresponding to the database; and
configuring a plurality of pieces of index information associated with the plurality of virtual data tables, wherein the index information comprises an index identification, a virtual data table to be queried, at least one query column in the virtual data table to be queried, and a query condition for each query column.

3. The database data processing method according to claim 1 or 2, wherein the statistical information required for evaluating the index cost comprises a number of distinct values and a number of rows of a query result set; the virtual index plugin comprises a request interface for the number of distinct values and a request interface for the number of rows of the query result set,
wherein the invoking the virtual index plugin configured in the database to send the cost estimation request to the cost estimation service comprises:
invoking the request interface for the number of distinct values in the virtual index plugin configured in the database to send, in a preset network protocol, an estimation request for the number of distinct values to the cost estimation service; and
invoking the request interface for the number of rows of the query result set in the virtual index plugin configured in the database to send, in the preset network protocol, an estimation request for the number of rows of the query result set to the cost estimation service, wherein the preset network protocol comprises an http network protocol or a rpc network protocol.

4. The database data processing method according to claim 3, further comprising:
in response to the cost estimation service receiving the estimation request for the number of distinct values, invoking, through an interface for estimating the number of distinct values on the cost estimation service, an estimation function for the number of distinct values; and
simulating, through the estimation function for the number of distinct values, the real index according to the database basic statistical information to determine the number of distinct values corresponding to the index information.

5. The database data processing method according to claim 4, wherein the index information comprises a plurality of query columns on which query operations are required to be performed; and wherein the simulating, through the estimation function for the number of distinct values, the real index according to the database basic statistical information to determine the number of distinct values corresponding to the index information comprises:
determining the number of distinct values of each of the query columns by using the estimation function for the number of distinct values;
acquiring, from the database basic statistical information, a historical number of distinct values corresponding to each piece of historical index information that is created, wherein the historical number of distinct values corresponding to each piece of historical index information comprises the number of distinct values of at least one query column;
determining a product of the numbers of distinct values of the plurality of query columns of the index information;
selecting, from respective historical numbers of distinct values, a number of distinct values of any subset belonging to the plurality of query columns and a number of distinct values of any superset comprising the plurality of query columns; and
determining a median number of the product, the number of distinct values of the any subset, and the number of distinct values of the any superset, and determining the median number as the number of distinct values corresponding to the index information.

6. The database data processing method according to claim 5, wherein the determining the median number of the product, the number of distinct values of the any subset, and the number of distinct values of the any superset comprises:
selecting, from the product and the number of distinct values of the any subset, a first number of distinct values with a larger numerical value;
selecting, from the first number of distinct values and the number of distinct values of the any superset comprising the plurality of query columns, a second number of distinct values with a smaller numerical value; and
determining the second number of distinct values as the median number.

7. The database data processing method according to claim 3, further comprising:
in response to the cost estimation service receiving the estimation request for the number of rows of the query result set, invoking, through a cardinality estimation interface on the cost estimation service, a cardinality estimation function; and
simulating, through the cardinality estimation function, the real index according to the database basic statistical information to determine the number of rows of the query result set corresponding to the index information.

8. The database data processing method according to claim 7, wherein the database comprises a plurality of data tables, the index information comprises a query range of a plurality of query columns, and the query range comprises a query minimum value and a query maximum value,
wherein the simulating, through the cardinality estimation function, the real index according to the database basic statistical information to determine the number of rows of the query result set corresponding to the index information comprises:
determining, through the cardinality estimation function, histogram information corresponding to each of the plurality of query columns, wherein the histogram information comprises a plurality of intervals, a value range of each interval, a number of data table rows corresponding to each interval, and a quantile of the number of data table rows corresponding to each interval;
determining, from the histogram information of each of the query columns, a first quantile corresponding to a first interval with the query minimum value located in and a second quantile corresponding to a second interval with the query maximum value located in, and determining a difference between the second quantile and the first quantile;
determining a product of the differences corresponding to respective query columns, and determining, according to the number of data table rows corresponding to each interval, a total number of rows of a target data table; and
determining, based on a product of the product of the differences corresponding to respective query columns and the total number of rows, the number of rows of the query result set corresponding to the index information.

9. A database data processing apparatus, comprising:
a creating unit (601), configured to create, in response to a database receiving a query request for target data, a plurality of candidate query plans corresponding to the query request, wherein each of the candidate query plans comprises an execution strategy for querying index information of the target data;
an invoking unit (602), configured to invoke, for each piece of index information in each of the candidate query plans, a virtual index plugin configured in the database to send a cost estimation request to a cost estimation service, wherein the cost estimation request is used to request the cost estimation service to estimate, for the index information, statistical information required for evaluating an index cost;
a determining unit (603), configured to determine, according to the statistical information required for evaluating the index cost and estimated by the cost estimation service through simulating a real index according to database basic statistical information in response to the cost estimation request for each piece of index information, a query cost of each of the candidate query plans; and
a controlling unit (604), configured to determine, from the plurality of candidate query plans, a target query plan of which query cost meets a preset condition, and control execution of the target query plan.

10. An electronic device, comprising: at least one processor and at least one memory;
wherein the at least one memory stores computer-executable instructions; and
the at least one processor executes the computer-executable instructions stored in the at least one memory to cause the at least one processor to perform the database data processing method of any one of claims 1 to 8.

11. A non-transitory computer-readable storage medium, wherein the non-transitory computer-readable storage medium stores computer-executable instructions, and when at least one processor executes the computer-executable instructions, the database data processing method of any one of claims 1 to 8 is implemented.

12. A computer program product, comprising a computer program, wherein when the computer program is executed by a processor, the database data processing method of any one of claims 1 to 8 is implemented.
